# EUROPEAN PATENT SPECIFICATION

(11) **EP 0 692 829 B1**
(45) Date of publication and mention of the grant of the patent: **13.12.2000**
(21) Application number: 95304863.4
(22) Date of filing: 12.07.1995
(51) Int. Cl.: H01M 2/12

(54) **A resealable safety valve and a sealed alkaline rechargeable battery provided the same safety valve**
Wiederschliessbares Sicherheitsventil und dieses enthaltende wiederaufladbare alkalische Batterie
Soupape de sûreté refermable et batterie alcaline rechargeable comportant cette soupape

(30) Priority: 13.07.1994 JP 16118894
(43) Date of publication of application: 17.01.1996
(73) Proprietor: MATSUSHITA ELECTRIC INDUSTRIAL CO., LTD., Kadoma-shi, Osaka-fu, 571 (JP)
(72) Inventor: Inoue, Hiroshi, Neyagawa-shi, Osaka 572 (JP); Hamada, Shinji, Hirakata-shi, Osaka 573 (JP); Matsuda, Hiromu, Kawabe-gun, Hyogo, 666-02 (JP); Ikoma, Munehisa, Shiki-gun, Nara 636-03 (JP); Yamasaki, Hiroshi, Katano-chi, Osaka 576 (JP)
(74) Representative: Crawford, Andrew Birkby

(56) References cited:
- AU-B- 474 196
- DE-A- 1 764 553
- DE-U- 8 534 913
- DE-U- 9 312 173
- FR-A- 898 194
- GB-A- 2 156 574
- PATENT ABSTRACTS OF JAPAN vol. 013 no. 325 (E-792) ,21 July 1989 & JP-A-01 093051 (SHIN KOBE ELECTRIC MACH CO LTD) 12 April 1989,

## Description

The present invention relates to a resealable safety vent for a sealed rechargeable battery having plastic container and a sealed alkaline battery provided with the same safety vent.

Recently, varieties of systems of rechargeable battery are used, taking advantage of their economy of repetitive use, in portable electric and electronic appliances, electric vehicles and other mobile gears, uninterruptible power systems(UPS) and in many other kinds of power systems for electric storage aimed for load levelling, etc. In order to make the power source unit lighter and smaller, the battery systems are strongly requested to have a higher energy density, longer life. higher safety, higher reliability, easier maintenance, higher operational economy and other performance items. Sealing of a battery container, among others, is an indispensable item for alleviating the complexity of maintenance in, for example, liquid replenishment, which bears inseparable relationship with the above mentioned performance items. As the means to seal a battery without causing increase of the cell inner pressure, several technologies have been developed, which include the absorption by negative electrode using the oxygen cycle reaction, the catalyst plug type, the auxiliary electrode and other types. Among these technologies, the absorption by negative electrode is popularly used. The sealing of rechargeable batteries by means of absorption by negative electrode is realized by a constitution, where the capacity of negative electrode is made larger than that of positive electrode, the capacity is adjusted so that only oxygen gas is generated from the positive electrode during charging, especially in the overcharge region, for reducing an electrolyte to the lowest possible and making the electrode group starved. In a battery thus constituted, the oxygen gas generated from the positive electrode during charging is reduced at the negative electrode and absorbed to vanish.

Gas pressure in the battery cell is maintained in equilibrium and quantity of the electrolyte is secured at a fixed volume without diminishing; therefore no replenishment is necessary. However, in many of the sealed rechargeable batteries, a resealable safety vent is provided in preparation for a possible abnormal increase of the internal pressure of battery cell which could be caused by a deteriorated gas absorption capability of negative electrode due to the passage of time or by an excessive charging current caused by disorder in a power supply device for charging. The resealable safety vent normally keeps a container sealed closing the inside of a battery cell from the ambient air, discharges an excessive gas generated within a battery cell at unusual occasions and seals again after the excessive gas is discharged outside the cell.

Among the sealed rechargeable batteries, a rechargeable battery using alkaline electrolyte of nickel-cadmium system or nickel-metal hydride system where caustic alkali of the electrolyte composed mainly of potassium hydroxide does not directly participate in the charge - discharge electrochemical reactions is preferred to a conventional lead-acid rechargeable battery system where sulphuric acid of an electrolyte also reacts, because the former category has higher energy density, longer life and higher reliability. Recently, rechargeable batteries of the former category are being increasingly used.

In most of the small size sealed alkaline rechargeable batteries, a steel cell can is caulk sealed at its top edge with a steel disk having unitized polyamide gasket around its circumference. In the rechargeable batteries for use in electric vehicle or electric storage, where by the nature of application a large capacity, hence a large size is needed, a commonly used configuration for attaining the safety and lightweight is that an electrode group consisting of a plurality of positive and negative plates overlayed with a separator in between is housed in a prismatic alkali-resistive plastic container.

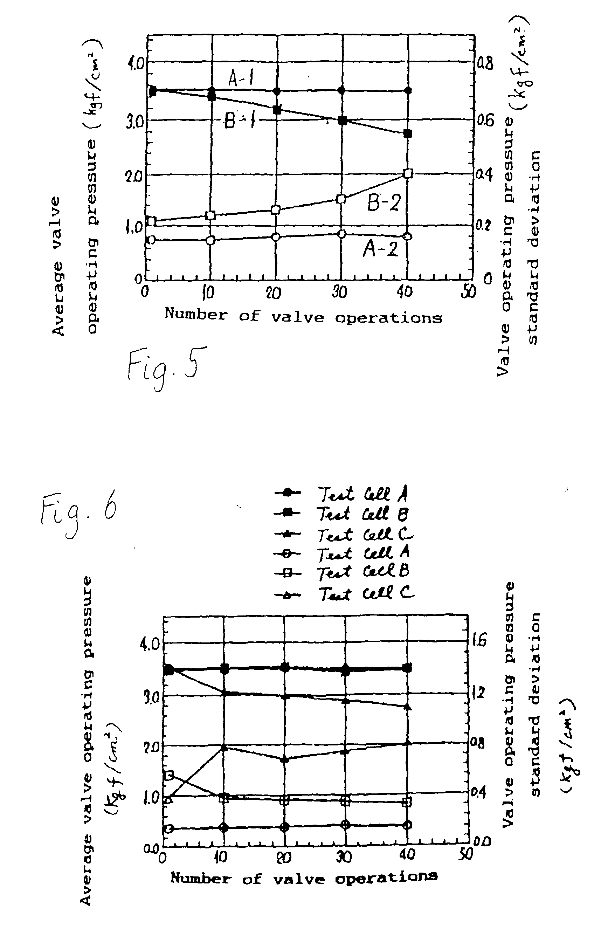

Representative examples of prior art resealable safety vents for sealed alkaline rechargeable battery are described in the following.
(1) In the first place, a case of small size sealed alkaline rechargeable battery comprised of a steel cell container, representative product of this category is nickel-cadmium battery production quantity of which is the largest right now, is described referring to patent publication gazette of Japan, Jitsu-Kai Sho58-10146. As illustrated in FIG.3, the battery is sealed under a configuration where a steel disc cover 34 having a through hole 32 at the centre surrounded by a circular extrusion 33 is welded with a steel cap 35 having a vent hole 37 and acts as the positive electrode, and the through hole 32 is hermetically sealed by an elastic vent body 31 of synthetic rubber which is inserted between the steel disc cover 34 and the steel cap 35 so that the circular extrusion 33 cut into the elastic vent body 31. Normally, top edge of a can 36, which houses an electrode group 39 made up of a positive and a negative plates with a separator in between wound and soaked with electrolyte, is curled to be sealed with the cover 34 placing a gasket 38 in between. If the pressure within cell go unusually high the high pressure gas pushes up the elastic vent body 31 placed on the through hole 32, and escapes through the vent hole 37. When the pressure within cell decrease the through hole 32 is closed again by the elastic vent body 31, and the cell is isolated from the ambient.
(2) Next a case of sealed alkaline rechargeable battery using nickel metal hydride system or others comprising a plastic container, being the same case as of the present invention, is described below taking the US Patent 5,258,242 as an example. One of embodiments of the US Patent is shown in FIG.4. In FIG.4, a resealable safety vent 40 has the constitution where a safety vent body 41 having a through hole 4 la at its bottom is screwed and attached with a safety vent cover 42 having a vent hole 42a; inside a space 40a thus created a valve seat 44 having its axis part 44a inserted inside of a coil spring 43 and having a O-ring 45 made of synthetic rubber affixed in a groove 44b is housed. The through hole 4 la of safety vent body 41 is closed by the O-ring 45 which is pressed to the inner surface of the safety vent body 41 by the action of the coil spring 43. By attaching the resealable safety vent 40 onto a battery container a cell is sealed and isolated from the ambient. If the gas pressure within a cell go higher than a specified operating pressure of the safety vent the excessive gas pushes up the valve seat 44 and the O-ring 45 positioned on the through hole 41a of the safety vent body 41 and escapes from the vent hole 42a of the safety vent cover 42, via the space 40a. When the cell pressure decrease, the sealed status is restored. Although in the above embodiment an O-ring is used to keep the sealed status, a synthetic rubber sheet may be used in place of the O-ring. Such other structures where a safety vent body and cover of an electrolyte container are unitized or a safety vent is screwed on to a battery container and other structures are also put in practical service.

There were a number of tasks remained unsolved, when these resealable safety vents are used for sealed alkaline rechargeable batteries of plastic container, the improvement of performance of this type of batteries is urged for use as power source of electric vehicles and other mobile apparatus.

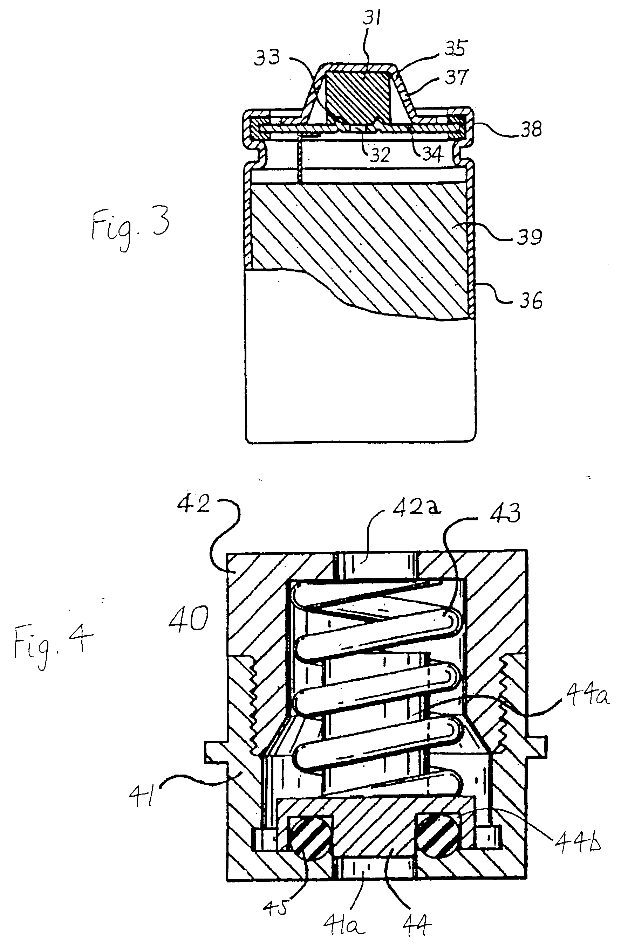

The resealable safety vent as illustrated in FIG.3 is suitable, as already described, for a sealed alkaline rechargeable battery which employs a small steel cell container and has a high operating pressure (higher than 10 kgf/c²) of the safety vent. For a sealed alkaline rechargeable battery with plastic container where the operating pressure of safety vent needs to be low, however, the resealable safety vent as illustrated in FIG.3 does not fit. If the safety vent is set at a lower operating pressure with the construction remaining as it is, spread of the operating pressure goes large and the reliability deteriorates.

A resealable safety vent having a structure as illustrated in FIG.4 is intrinsically applicable to a plastic container sealed alkaline rechargeable battery. However, when it is used in a power source of moving apparatus such as an electric vehicle, the safety vent cover 42 gets loose from the tight screwing to the safety vent body 41 affected by external forces such as vibration, shock, acceleration, etc. and the operating pressure of the safety vent gradually tends to shift lower. Under such a situation, as the duty time goes by and the charge-discharge cycle is repeated the valve operating pressure goes further low, the gas generated during charging is discharged out of a cell before the charging electricity reach a specified level, quantity of electrolyte decreases and the internal resistance of the battery increases. The increased internal resistance results in an increased cell voltage during charging which invites insufficient charging, also lowered cell voltage during discharge causing deteriorated capacity and cycle life. Another problem intrinsic to a construction where a safety vent cover is screwed and fixed to a safety vent body is that the safety vent cover might be unscrewed and loosened by a casual mistake of a user causing a deviated operating pressure of the safety vent; therefore unable to guarantee the operational reliability. Furthermore, in a sealed alkaline rechargeable battery where a resealable safety vent is screwed and fixed to a cover of electrolyte container, the adverse influence of aforementioned external forces such as vibration, shock, etc. is significant and the reliability is further deteriorated.

A first objective of the present invention is to offer a hermetically resealable safety vent that provides a stable valve operating pressure and a high operational reliability in a sealed alkaline rechargeable battery of a plastic battery cell container for use as power source of mobile apparatus like electric vehicle, etc.

A second objective of the present invention is offer a sealed alkaline rechargeable battery that provides a stable charge-discharge characteristic and a long cycle life even when it is used as power source of mobile apparatus by virtue of a fact that the battery is equipped with a resealable safety vent in accordance with the present invention.

According to the present invention there is provided a resealable safety vent for a battery comprising:
a safety vent body having a through hole at the center of its bottom inner surface surrounded by a circular extrusion;
a safety vent cover having a vent hole; and
an elastic valve component made up of a valve seat and a resilient pad unitized into one-piece unit, the top part of which is inserted inside a coil spring so that the top surface of a flange part of said valve component is pressed by said coil spring, which is housed within said body; wherein
said elastic valve component is pressed with the bottom surface of the pad to the circular extrusion inside said safety vent body to close the through hole,
characterised in that the safety vent cover is unitized with the safety vent body by means of fusion bonding to provide a space within, and in that the material of the safety vent body and the safety vent cover is at least a one which is the same as the material of a container for said battery and which is selected from the group of such alkali resistive plastic as polyamide, polypropylene, denatured resin mainly composed of polyphenylene ether, acrylonitrile-styrene copolymer, acrylonitrile-butadiene-styrene terpolymer.

FIG.1 shows longitudinal sectional view of a resealable safety vent for sealed rechargeable battery in accordance with the present invention.

FIG.2 shows longitudinal sectional view of a one-piece valve component within a resealable safety vent in accordance with the present invention.

FIG.3 shows partially sectional view of a prior art small size sealed alkaline rechargeable battery using a steel cell container.

FIG.4 shows longitudinal sectional view of an example of prior art resealable safety vent for sealed alkaline rechargeable battery of a plastic cell container.

FIG.5 shows the correlation between the number of repetitive valve operations and the average value and standard deviation value of valve operating pressure in the resealable safety vent.

FIG.6 shows correlation between the charge-discharge cycle number and the average value and standard deviation of value operating pressure in the resealable safety vent.

FIG.7 shows partially cutaway perspective view of a sealed alkaline rechargeable battery equipped with the resealable safety vent.

FIG.8 shows the correlation between the charge-discharge cycle number and the discharge capacity.

### V DETAILED DESCRIPTION OF THE INVENTION

The present invention is a resealable safety vent comprising:
a safety vent body having a through hole at the center of inner bottom surrounded by a circular extrusion, and
a safety vent cover having a vent hole,
an elastic valve component made up of a valve seat and a rubber pad unitized into one-piece unit, the top part of which is inserted inside of a coil spring so that the top surface of flange part of said valve component is pressed by said coil spring, which is housed within the space; wherein
said elastic valve component presses itself with the bottom surface of the rubber pad to the circular extrusion inside of said safety vent body and closes the through hole, characterised in that the safety vent cover is unitized with the safety vent body by means of a fusion bonding method to provide a space within, and in that the material of the safety vent body and the safety vent cover is at least a one which is the same as the material of the battery container selected from the group of such alkali resistive plastic as polyamide, polypropylene, denatured resin mainly composed of polyphenylene ether, acrylonitrile-styrene copolymer, acrylonitrile-butadiene-styrene terpolymer, etc.

Furthermore, the present invention solves the hitherto technical problems of sealed alkaline rechargeable battery by employing a plastic container equipped with a resealable safety vent.

Details of the present invention is described with examples in the following, citing FIGs and Tables.

### Example 1

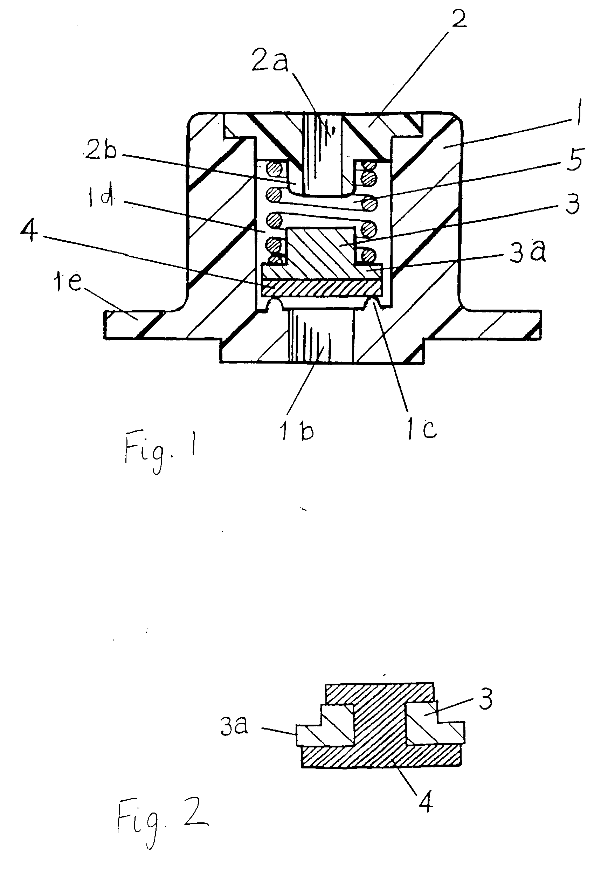

FIG. 1 shows longitudinal sectional view of a resealable safety vent for sealed rechargeable battery in accordance with the present invention. In FIG. 1, a safety vent body 1 has at the center of its bottom inner surface a through hole 1b surrounded by a circular extrusion 1c. In the first place, place a unitized valve component consisting of a valve seat 3 and a rubber pad 4 attached to the flat bottom surface of flange 3a inside the inner space 1d of safety vent body 1. The rubber pad 4 must be placed on the bottom surface of safety vent body at its circular extrusion 1c. Then a coil spring 5 is placed on the valve seat flange 3a with the top part of valve seat 3 inserted within the inside of the coil spring 5. Then. the bottom extrusion 2b of safety vent cover having a vent hole 2 is inserted within the inside of top part of the coil spring 5; and the safety vent cover 2 presses down the coil spring 5 with the bottom surface of safety vent cover 2 so that the safety vent cover 2 is affixed to the top hollow of the safety vent body 1, and bonded or fusion bonded to become unitized. Thus a resealable safety vent in accordance with the present invention is fabricated.

In this constitution, the bottom surface of rubber pad 4 is pressed on the circular extrusion 1c of safety vent body 1 and the through hole 1b is closed. Inside the safety vent body 1 has a cylindrical shape, and horizontal cross sections of the safety vent cover 2, valve seat 3 and rubber pad 4 are round.

The constituents of resealable safety vent in accordance with the present invention, viz. the safety vent body 1, the safety vent cover 2, a valve component consisting of the valve seat 3 and rubber pad 4, and the coil spring 5 are stacked with their center lines in one axis. ABS resin (acrylonitrile-butadiene-stylene terpolymer) is used as material for the safety vent body 1, the safety vent cover 2 and the valve seat 3. Diameter of the valve seat flange 3a, being a valve component to be housed in the safety vent body 1, is made smaller than inner diameter of the safety vent body 1; diameter of the rubber pad 4 which is to be unitized by bonding with the valve seat flange having flat bottom surface is made equal to or slightly smaller than diameter of the valve seat flange 3a. The rubber pad 4 used has a 1.0mm thickness, a 75 degree Shore hardness. made of an EPT(ethylene-propylene-diene terpolymer) disk. The coil spring 5 is made of a stainless steel wire material, the free length of which is 8.75mm, and the spring constant 0.8 kgf/mm. Outer diameter of the coil spring 5 is made smaller than inner diameter of the safety vent body 1, inner diameter is made larger than outer diameter of the top part of valve seat 3, and these are designed and fabricated so that an elastic valve component consisting of the unitized valve component made of the valve seat 3 and the rubber pad 4, and the coil spring 5 can move up and down smoothly within the safety vent body 1. The safety vent body 1 and the safety vent cover 2 may be unitized by means of bonding, however, the ultrasonic fusion bonding method is recommendable in view of higher working efficiency.

Resealable safety vent in accordance with the present invention with the operating pressure set at 3.5± 0.5 kgf/cm² (A) and the resealable safety vent same as (A) except that the safety vent body 1 and the safety vent cover 2 are unitized by means of screwing (B) have been prepared 100pcs.each as samples for comparative study (operating pressure of the samples B is of course set at the same value as samples A). These sample valves have been fusion bonded at their flange part le to cover of ABS resin-made cell container to make sample batteries for comparison. The comparative test was conducted with high pressure nitrogen gas from a cylinder fed to inside of the cell container to make the safety vent repeatedly work. In FIG.5, average value of the valve operating pressure and standard deviation value of the comparative samples are shown. Among the comparative samples, the average operating pressure B-1 goes low and the standard deviation value B-2 increases along with repetitive operation of the valve (FIG.5). After examining the comparative samples whose valve operating pressure became low it was found out that screwing of the safety vent cover to the safety vent body turned out to be loose. This loosening seems to have been caused by the vibration. The safety vent cover had been screwed to the safety vent body with a torque wrench to adjust the valve operating pressure, however it was difficult to adjust the operating pressure with high accuracy. Because of this, the standard deviation value of valve operation pressure among the comparative samples was already large from the beginning. Meanwhile, it is confirmed that the resealable safety vent in accordance with the present invention wherein the safety vent body and the safety vent cover are unitized by bonding show a least change in the average value of valve operating pressure A-1 and the standard deviation value A-2 even after undergoing a number of repetitive valve operations; which means a high operational reliability.

Next, as comparative sample (C), resealable safety vents having the same structure as the valve (A) in accordance with the present invention except that form of the safety vent body 1 and the valve seat 3 is a square cylinder have been prepared.

Furthermore, as comparative sample(D), resealable safety vents having the same structure as the valve(A) in accordance with the present invention except that the axes of the circular extrusion 1c, the safety vent cover 2, the valve seat 3, the rubber pad 4 and the coil spring 5 do not coincide with the axis of the internal space 1d have been prepared.

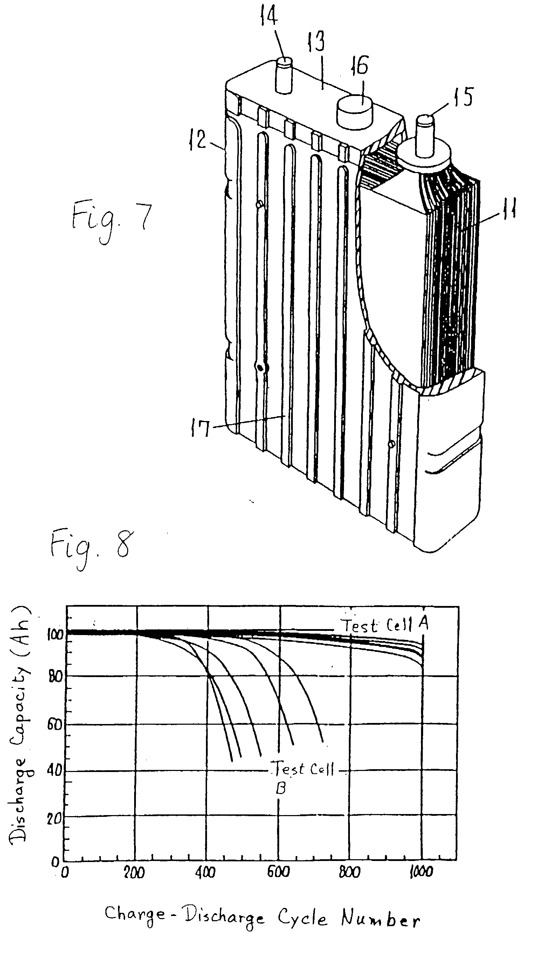

The valve(A) in accordance with the present invention, the sample valve(B) and (C) have been prepared 100pcs each. These resealable safety vents having (A), (B) and (C) structures were set at an operating pressure 3.5 ± 0.5kgf/cm², and underwent repeated measurement of the valve operating pressure. The measurement of the valve operating pressure was repeated by feeding nitrogen gas from a hole closed by the valve component 3 to give pressure to the bottom surface of the sealing material 4. While the nitrogen gas pressure is being raised when a gas pressure higher than 0.1kgf/cm² is detected at the vent hole 2a the valve is judged to have operated and the nitrogen gas pressure at that moment is recorded as the valve operating pressure. After repeating this test. the average valve operating pressure and the standard deviation value were calculated for each of the samples (A), ( B) and (C). The results are shown in FIG.6.

As FIG.6 indicates, the resealable safety vent sample(B) do not show increase of the standard deviation of the valve operating pressure caused by repetitive valve operation. However, the square cyndrical shape of the internal space 1d and the valve seat 3 tends to cause concentration of the friction at four corners of the both when side-wall of the internal space 1d and the valve seat 3 touch to each other during valve operation. Because of this, the smooth up-down motion of the valve seat 3 within the internal space 1d is blocked; hence, the standard deviation value of the valve operating pressure, especially during the first valve operation, is large as compared with the (A) samples.

The resealable safety vent sample (D) show decreasing average value of the valve operating pressure along with the repetitive valve operation, and the standard deviation value of which is increased. Because of a structure that the axes of the safety vent cover 2, the valve seat 3, rubber pad 4 and the coil spring 5 are not on the axis of the internal space 1d, the safety vent cover 2, the valve seat 3, the rubber pad 4 and the coil spring 5 can not return to the original position before and after a valve operation. Due to this reason, after repetitive valve operation, especially after the first operation, relative positioning among the safety vent cover 2, the valve seat 3, the rubber pad 4 and the coil spring 5 is significantly displaced; causing a large standard deviation value of the valve operation at the early stage. Thereafter, along with the repeating valve operation, the displacement of relative positioning among the safety vent cover 2, the valve seat 3, the rubber pad 4 and the coil spring 5 gradually increases, and the average valve operating pressure decreases, the valve operating pressure does not become stable and the standard deviation of the valve operating pressure increases.

In contrast to the above mentioned results, in the resealable safety vent samples (A) in accordance with the present invention, whose internal space 1d and the valve seat 3 have a cylindrical shape and the axes of the safety vent cover 2, the valve seat 3, the rubber pad 4 and the coil spring 5 are in coincidence with the axis of the internal space 1d, the valve seat 3 moves up and down within the internal space Id during valve operation, and the axes of the valve seat 3 and the coil spring 5 hardly shifts from the axis of the internal space 1d. Therefore, even when the number of repetitive valve operations -increase the average value of the valve operating pressure and the standard deviation value are stable.

**Table 1**

| Sample No. | Rubber pad | | Valve operating pressure standard deviation [kgf/cm²] | Leakage [%] |
|---|---|---|---|---|
| | Thickness [mm] | Hardness [degree] | | |
| 1 | 0.4 | 40 | 0.85 | 100 |
| 2 | | 50 | 0.37 | 100 |
| 3 | | 75 | 0.20 | 100 |
| 4 | | 100 | 0.19 | 100 |
| 5 | | 110 | 0.50 | 100 |
| 6 | 0.5 | 40 | 0.23 | 100 |
| 7 | | 50 | 0.16 | 89 |
| 8 | | 75 | 0.15 | 69 |
| 9 | | 100 | 0.13 | 75 |
| 10 | | 110 | 0.20 | 100 |
| 11 | 1.0 | 40 | 0.25 | 98 |
| 12 | | 50 | 0.16 | 10 |
| 13 | | 75 | 0.15 | 5 |
| 14 | | 100 | 0.14 | 38 |
| 15 | | 110 | 0.24 | 89 |
| 16 | 1.5 | 40 | 0.78 | 20 |
| 17 | | 50 | 0.26 | 19 |
| 18 | | 75 | 0.17 | 79 |
| 19 | | 100 | 0.16 | 100 |
| 20 | | 110 | 0.31 | 100 |
| 21 | 1.6 | 40 | 1.59 | 10 |
| 22 | | 50 | 1.37 | 5 |
| 23 | | 75 | 0.71 | 100 |
| 24 | | 100 | 0.69 | 100 |
| 25 | | 110 | 0.59 | 100 |

### Example 2

Using the same structure as a resealable safety vent in accordance with the present invention as illustrated in FIG. 1, constituent parts other than the rubber pad 4 are maintained the same as those in the Example 1, and the rubber pad 4 is varied in thickness and Shore hardness and the valve operating pressure is measured. The valve operating pressure, among other items, is focused and the spread is compared by the standard deviation value. Furthermore, sample of nickel-metal hydride system sealed alkaline rechargeable battery having nominal capacity 100Ah, to be referred to in the forthcoming Example 5, equipped with the resealable safety vent have been prepared to be checked whether or not there is any leakage from the vent hole of the safety vent cover after having undergone a temperature cycle test, from -10°C to +65°C and from +65°C to -10°C in linear transition, for 50 cycles in 24hr, under a 90% relative humidity ambient. Results are shown in Table 1.

As indicated in Table 1, when the rubber pad is 0.4mm thick, all of the samples leak despite the varied Shore hardness; no hermetic sealing is secured. When the rubber pad is 1.6mm thick, standard deviation value of the valve operating pressure is large; the operating pressure turns out to be unstable. When the rubber pad thicknesses are 0.5 - 1.5mm, the valve operating pressure stays in a relatively stable range: however, with the Shore hardness 40° the hermetic sealing is not secured, a high leakage rate. The Shore hardness 110° also results in a high leakage rate. After all, the valve operates in a stable manner with high reliability with the rubber pad thickness is within a range 0.5 - 1.5mm, and the Shore hardness is within a range 50° - 100°.

### Example 3

Using the same structure as a resealable safety vent in accordance with the present invention as illustrated in FIG. 1, constituent parts other than the coil spring are maintained the same as those in Example 1, and the coil spring 5 is varied in the free length and the spring constant, and the valve operating pressure is measured. The spread of valve operating pressure is compared by the standard deviation value. The results are shown in Table 2.

**Table 2**

| Sample No. | Coil spring | | Valve operating pressure standard deviation [kgf/cm²] |
|---|---|---|---|
| | Free length [mm] | Constant kgf/mm | |
| 26 | 4.0 | 0.1 | 0.99 |
| 27 | | 0.2 | 0.98 |
| 28 | | 0.8 | 0.72 |
| 29 | | 2.0 | 0.69 |
| 30 | | 2.1 | 0.86 |
| 31 | 5.0 | 0.1 | 0.56 |
| 32 | | 0.2 | 0.16 |
| 33 | | 0.8 | 0.13 |
| 34 | | 2.0 | 0.15 |
| 35 | | 2.1 | 0.38 |
| 36 | 8.75 | 0.1 | 0.32 |
| 37 | | 0.2 | 0.15 |
| 38 | | 0.8 | 0.15 |
| 39 | | 2.0 | 0.18 |
| 40 | | 2.1 | 0.47 |
| 41 | 15.0 | 0.1 | 0.53 |
| 42 | | 0.2 | 0.19 |
| 43 | | 0.8 | 0.19 |
| 44 | | 2.0 | 0.23 |
| 45 | | 2.1 | 0.45 |
| 46 | 16.0 | 0.1 | 0.78 |
| 47 | | 0.2 | 0.39 |
| 48 | | 0.8 | 0.40 |
| 49 | | 2.0 | 0.81 |
| 50 | | 2.1 | 1.09 |

As indicated in Table 2, the spread goes large when the free length of coil spring is 16.0mm. This seems to have been caused by a fact that because the free length of coil spring is too long and the coil caused blocking during assembly of the safety vent. A 4.0mm free length seems to be too short for the coil spring to store an appropriate quantity of flexion, and the valve operating pressure show a large spread. A range of suitable coil spring length is within 5.0 - 15.0mm; within the range, however, a 0.1 kgf/mm spring constant causes blocking of the coil spring during assembly of the safety vent resulting in a large spread of the valve operating pressure. Through these facts it is confirmed that a high reliability in operating pressure of the safety vent is obtainable when the coil spring 5 is within a range 5.0 - 15.0mm in free length and 0.2 - 2.0kgf/mm in spring constant.

### Example 4

Using the same structure as a resealable safety vent in accordance with the present invention as illustrated in FIG.1, constituent parts other than the safety vent body 1 are maintained the same as those in the Example 1, and the safety vent body 1 is varied in height of the circular extrusion la and the valve operating pressure is measured. Spread of the valve operating pressure is compared by the standard deviation value. Results are shown in Table 3.

**Table 3**

| Sample No. | circular extrusion Height [mm] | Valve operating pressure standard deviation [kgf/cm²] |
|---|---|---|
| 51 | 0.00 | 1.01 |
| 52 | 0.24 | 0.49 |
| 53 | 0.25 | 0.18 |
| 54 | 0.50 | 0.15 |
| 55 | 2.00 | 0.22 |
| 56 | 2.10 | 0.35 |

From Table 3 it is understood that when height of the circular extrusion la is within a range 0.25 - 2.00mm, operating pressure of the safety vent is stable. The reason seems to be that when the height of extrusion is lower than 0.24mm the pressure by bottom surface of the rubber pad 4 of valve component to the bottom of the safety vent body 1 turns out to be insufficient; while if the height of extrusion is more than 2.00mm overall length of the elastic valve component turns out to be relatively too long and the bottom surface of rubber pad does not always homogeneously fit horizontally to the extrusion.

### Example 5

Comparative samples of nickel-metal hydride system sealed alkaline rechargeable batteries having nominal capacity of 100Ah equipped with resealable safety vent in accordance with the present invention (A), and the same batteries equipped with resealable safety vent the safety vent cover of which is, in the same way as the comparative samples in Example 1, screwed to and fixed with the safety vent body (B), 5 (A) cells and 5 (B) cells, underwent a charge and discharge cycle life test with a vibration simulated to a power source of electric vehicle given in the discharge duration. The valve operating pressure is adjusted to 3.5±0.5kgf/cm² for both (A) and (B) resealable safety vents.

FIG.7 shows partially cutaway perspective view of the test cell of sealed alkaline rechargeable battery. In FIG.7, a group of electrodes 11 is made up of ten 10Ah positive plates which are high porous formed nickel sheets filled with a paste made mainly of active nickel hydroxide power and eleven 13Ah negative plates which are nickel plated performed steel sheets roll pressed after both sides of core material is coated with a hydrogen storage alloy having composition of Mm Ni_{3.6}Co_{0.7}Mn_{0.4}Al_{0.4} and binder; each one is wrapped with separator and stacked alternately. Overall thickness of the electrode group 11 is made to 85 - 100% of internal length of battery container. Positive and negative lead plates of the electrode group 11 are welded to a nickel plated steel positive terminal 14 and negative terminal 15, respectively, and then housed in an ABS resin container 12. Then, a 180ml alkaline electrolyte is poured for impregnation into the electrode group 11. And then, an ABS resin cover 13 on which a resealable safety vent is already hermetically fusion bonded is unitized with the battery container 12 by adhesive, and the positive terminal 14 and negative terminal 15 are hermetically fixed to the container cover 13 to complete a sealed alkaline rechargeable battery. Outer surface of the battery container 12 is provided with a number of ribs 17 for reinforcing mechanical strength of the container and securing spaces between the cells for heat dissipation.

Test cells (A) and (B) equipped, respectively, with the resealable safety vent in accordance with the present invention and the comparative sample valve, are initial-charged with 10A constant current for 15h and then discharged at a 20A constant current to 1.OV for battery container formation to make the electrode group 11 swollen and firmly held by the inner wall of battery container 12.

The cycle life test is conducted in room temperature, by repeating a cycle of charging for 12h at a 10A constant current and 1h rest, and then discharging at a 20A constant current to 1.OV and about lh rest. As described earlier, during discharging in the cycle life test the sample cells are given with a vibration. The test results are shown in FIG.8.

FIG.8 clarifies that all of the 5 (A) test cells equipped with resealable safety vent in accordance with the present invention have more than 80% of the nominal capacity after undergoing the charge-discharge for 1000 cycles, whereas the (B) comparative test cells, the safety vent body and the safety vent cover of which are fixed by screwing, show a spreaded cycle life of 400 - 720 cycles until decreasing down to 80Ah which corresponds to 80% of the nominal capacity. Among the (B) test cells, it is observed that the screwing between safety vent body and safety vent cover turned out to be loose resulting in a decreased valve operating pressure which caused escaping of oxygen and hydrogen gas generated during charging and decreased electrolyte quantity, hence a decreased cell weight. All of these cells have increased internal resistance, which seems to be causing insufficient charging and deteriorated discharge capacity.

As each of the foregoing Examples indicates, unitizing the safety vent body and the safety vent cover by means of bonding or fusion bonding instead of fixing by a conventional screwing method is one of the important points of the present invention. Although the Examples are described with the ultrasonic fusion bonding method, thermally molten bonding method and bonding with adhesive are also applicable. These unitizing methods are usable commonly for unitizing the safety vent body and the cover of battery container and for unitizing the battery container and the cover of battery container. To make full use of the advantage of this method it is advisable to select and use a same plastic material for the battery container, the container cover, the safety vent body and the safety vent cover. Besides ABS resin as exemplified in the foregoing Examples, the plastic material may be selected from the group of such alkali resistive plastic materials as polyamide resin, PP resin(polypropylene), AS resin(acrylonitrile-stylene copolymer), denatured resin mainly composed of polyphenylene ether, and others.

As for the rubber pad, it may be selected from the group of such alkali resistive low hydrogen permeability synthetic rubber as chloroprene rubber(polychlorobutadiene), nitrile rubber(acrylonitrile-butadiene copolymer), etc., besides EPT rubber as exemplified in the foregoing Examples. The valve component which is made of the valve seat and the rubber pad unitized forming a one-piece component may be manufactured as homogeneous quality components for production by setting the valve seat 3 having flange 3a as illustrated in FIG.2 made of alkali resistive metal like stainless steel in a metal mold to be injection-molded with a thermoplastic synthetic rubber material, and then by applying heat sulfation after having been shaped as one-piece component.

Although description is made solely with the nickel metal hydride system in the foregoing Examples, the present invention is applicable to any and all the sealed alkaline rechargeable batteries whether they are of nickel-cadmium system, nickel-zinc system, or silver-zinc system.

As have been explained in detail in the foregoing descriptions the present invention makes it possible by quite a simple method to present a highly reliable plastic container sealed alkaline rechargeable battery, the resealable safety vent of which maintains a specified operating pressure stabilized for a long period of time even when the battery is used under an adverse external influence such as vibration, shock, acceleration, etc. which caused substantial problems in prior art technologies.

## Claims

1. A resealable safety vent for a battery comprising:
a safety vent body (1) having a through hole (1b) at the center of its bottom inner surface surrounded by a circular extrusion (1c);
a safety vent cover (2) having a vent hole (2a); and
an elastic valve component made up of a valve seat (3) and a resilient pad (4) unitized into one-piece unit, the top part of which is inserted inside a coil spring (5) so that the top surface of a flange part (3a) of said valve component is pressed by said coil spring (5), which is housed within said body (1); wherein
said elastic valve component is pressed with the bottom surface of the pad (4) to the circular extrusion (1c) inside said safety vent body (1) to close the through hole (1b),
characterised in that the safety vent cover (2) is unitized with the safety vent body (1) by means of fusion bonding to provide a space within, and in that the material of the safety vent body (1) and the safety vent cover (2) is at least a one which is the same as the material of a container for said battery and which is selected from the group of such alkali resistive plastic as polyamide, polypropylene, denatured resin mainly composed of polyphenylene ether, acrylonitrile-styrene copolymer, acrylonitrile-butadiene-styrene terpolymer.

2. A resealable safety vent in accordance with claim 1, wherein
the inside of the safety vent body (1) has a cylindrical shape, horizontal cross sections of the safety vent cover (2), the valve seat (3) and the pad (4) are round; and the safety vent body, the safety vent cover, the valve component consisting of the valve seat and the pad, and the coil spring are stacked vertically with their center lines on a common axis.

3. A resealable safety vent in accordance with claim 1 or 2, wherein the height of the circular extrusion (1c) on the bottom inner surface of the safety vent body (1) is within a range 0.25-2.00mm, and the cross sectional shape of the circular extrusion (1c) at its top edge is semi-circular.

4. A resealable safety vent in accordance with any of claims 1-3, wherein the diameter of the flange part (3a) of the valve seat (3) is made of an alkali resistive plastic or metal and is smaller than the inside diameter of the safety vent body, and the flat bottom surface of said flange part (3a) of valve seat (3) is bonded or fusion bonded to said pad (4) to compose a one-piece component, the pad having a diameter equal to or smaller than that of the flange diameter, a thickness of 0.5 - 1.5mm, and a Shore hardness within a range 50° - 100°.

5. A resealable safety vent in accordance with any of claims 1-4, wherein the material of said pad (4) is at least one selected from the group of alkali resistive synthetic materials having low hydrogen permeability such as acrylonitrile-butadiene co-polymer, polychlorobutadiene and ethylene-propylene-diene.

6. A resealable safety vent in accordance with any of claims 1-5, wherein the valve component is manufactured with said valve seat (3) formed of an alkali resistive metal and unitized with a thermoplastic synthetic resilient material by means of injection molding, and then sulfated by heating.

7. A resealable safety vent in accordance with any preceding claim wherein the coil spring is made from a stainless steel or a nickel plated steel wire, has a free length 5-15mm, and the spring constant falls within the range 0.2-2.0kgf/mm.

8. A sealed alkaline rechargeable battery, comprising a container (12) housing a plurality of electrode groups (11) made of positive plates and negative plates with separator in between, and containing an appropriate quantity of alkaline electrolyte to have said electrode groups impregnated, and a container cover (13) equipped with a resealable safety vent (16) in accordance with any one of claims 1 through 7, the cover being hermetically sealed with the container along the latter's top edge by means of bonding or fusion bonding.

9. A sealed alkaline rechargeable battery in accordance with claim 8, wherein said safety vent body is incorporated as monobloc with said container cover, or said safety vent body is bonded or fusion bonded with said container cover to become a part of the container cover, said valve component and said coil spring are placed inside the safety vent body of said container cover; and a bottom extrusion of the safety vent cover is inserted in the inside of the top end of the coil spring and said safety vent cover presses with its bottom surface said coil spring down to have the safety vent cover affixed to a hollow at the top of said safety vent body and bonded or fusion bonded together to form the completed resealable safety vent.

## Patentansprüche

1. Wiederverschließbare Sicherheitsbelüftung für eine Batterie, die aufweist:
einen Sicherheitsbelüftungskörper (1), der ein Durchgangsloch (1b) an der Mitte seiner inneren Bodenfläche, umgeben durch eine kreisförmige Extrusion (1c), besitzt;
eine Sicherheitsbelüftungsabdeckung (2), die ein Belüftungsloch (2a) besitzt; und
eine elastische Ventilkomponente, die aus einem Ventilsitz (3) und einem elastischen Kissen (4), zusammengefügt zu einer einteiligen Einheit, aufgebaut ist, wobei der obere Teil davon innerhalb einer Schraubenfeder (5) eingesetzt ist, so daß die obere Fläche eines Flanschteils (3a) der Ventilkomponente durch die Schraubenfeder (5) gedrückt wird, die innerhalb des Körpers (1) untergebracht ist; wobei
die elastische Ventilkomponente mit der Bodenfläche des Kissens (4) auf die kreisförmige Extrusion (1c) innerhalb des Sicherheitsbelüftungskörpers (1) gedrückt wird, um das Durchgangsloch (1b) zu verschließen,
dadurch gekennzeichnet, daß die Sicherheitsbelüftungsabdeckung (2) mit dem Sicherheitsbelüftungskörper (1) mittels einer Schmelzverbindung zu einer Einheit zusammengefügt ist, um einen Raum darin zu schaffen, und daß das Material des Sicherheitsbelüftungskörpers (1) und der Sicherheitsbelüftungsabdeckung (2) mindestens ein solches ist, das dasselbe wie das Material eines Behälters für die Batterie ist, und das aus der Gruppe ausgewählt ist, die einen alkalibeständigen Kunststoff, wie Polyamid, Polypropylen, denaturiertes Harz, hauptsächlich zusammengesetzt aus Polyphenylether, Acrylonitrilsty-rencopolymer, Acrylonitrilbutadienstyrenterpolymer, umfaßt.

2. Wiederverschließbare Sicherheitsbelüftung nach Anspruch 1, wobei
die Innenseite des Sicherheitsbelüftungskörpers (1) eine zylindrische Form besitzt, wobei die horizontalen Querschnitte der Sicherheitsbelüftungsabdeckung (2), des Ventilsitzes (3) und des Kissens (4) rund sind; und der Sicherheitsbelüftungskörper, die Sicherheitsbelüftungsabdeckung, die Ventilkomponente, die aus dem Ventilsitz und dem Kissen besteht, und die Schraubenfeder vertikal mit deren Mittellinien auf einer gemeinsamen Achse gestapelt sind.

3. Wiederverschießbare Sicherheitsbelüftung nach Anspruch 1 oder 2, wobei die Höhe der kreisförmigen Extrusion (1c) auf der inneren Bodenfläche des Sicherheitsbelüftungskörpers (1) innerhalb eines Bereichs von 0,25-2,00 mm liegt, und die Querschnittsform der kreisförmigen Extrusion (1c) an deren Oberseitenkante halbkreisförmig ist.

4. Wiederverschließbare Sicherheitsbelüftung nach einem der Ansprüche 1 - 3, wobei der Durchmesser des Flanschteils (3a) des Ventilsitzes (3) aus einem alkalischen, widerstandsfähigen Kunststoff oder Metall gebildet ist und kleiner als der innere Durchmesser des Sicherheitsbelüftungskörpers ist, und die flache Bodenfläche des Flanschteils (3a) des Ventilsitzes (3) an dem Kissen (4) angebondet oder schmelzgebondet ist, um eine einteilige Komponente zu bilden, wobei das Kissen einen Durchmesser gleich zu oder kleiner als derjenige des Flanschdurchmessers, eine Dicke von 0,5-1,5 mm und eine Shore-Härte innerhalb eines Bereichs von 50° - 100° besitzt.

5. Wiederverschließbare Sicherheitsbelüftung nach einem der Ansprüche 1 - 4, wobei das Material des Kissens (4) mindestens eines ausgewählt aus der Gruppe von alkalischwiderstandsfähigen, synthetischen Materialien ist, die eine niedrige Wasserstoffpermeabilität haben, wie beispielsweise Acrylonitrilbutadiencopolymer, Polychlorobutadien und Ethylenpropylendien.

6. Wiederverschließbare Sicherheitsbelüftung nach einem der Ansprüche 1 - 5, wobei die Ventilkomponente mit dem Ventilsitz (3), gebildet aus alkalisch-widerstandsfähigem Metall und zu einer Einheit mit einem thermoplastischen, synthetischen, elastischen Material mittels Injektionsspritzgießen, und dann sulfatiert durch Erwärmen, hergestellt ist.

7. Wiederverschließbare Sicherheitsbelüftung nach einem vorgehenden Anspruch, wobei die Schraubenfeder aus einem rostfreien Stahl oder einem nickel-plattierten Stahldraht hergestellt ist, mit einer freien Länge von 5 - 15 mm, und wobei die Federkonstante innerhalb eines Bereichs von 0,2 - 2,0 kgf/mm fällt.

8. Gedichtete, alkalische, wiederaufladbare Batterie, die einen Behälter (12), der eine Vielzahl von Elektrodengruppen (11) aufnimmt, hergestellt aus positiven Platten und negativen Platten mit einem Separator dazwischen, und enthaltend eine geeignete Menge eines alkalischen Elektrolyts, damit die Elektrodengruppe imprägniert ist, und eine Behälterabdeckung (13), die mit einer wiederverschließbaren Sicherheitsbelüftung (16) gemäß einem der Ansprüche 1 bis 7 versehen ist, aufweist, wobei die Abdeckung hermetisch gegenüber dem Behälter entlang der Oberseitenkante des letzteren mittels Bonden oder Schmelzbonden gedichtet ist.

9. Gedichtete, alkalische, wiederaufladbare Batterie nach Anspruch 8, wobei der Sicherheitsbelüftungskörper als ein Stück mit der Behälterabdeckung eingesetzt ist, oder der Sicherheitsbelüftungskörper an der Behälterabdeckung angebondet oder schmelzgebondet ist, um ein Teil der Behälterabdeckung zu werden, wobei die Ventilkomponente und die Schraubenfeder innerhalb des Sicherheitsbelüftungskörpers der Behälterabdeckung plaziert sind; und wobei eine Bodenextrusion der Sicherheitsbelüftungsabdeckung in die Innenseite des oberen Endes der Schraubenfeder eingesetzt ist und die Sicherheitsbelüftungsabdeckung mit deren Bodenfläche die Schraubenfeder nach unten drückt, um eine Sicherheitsbelüftungsabdeckung zu haben, die an einem Hohlraum an der Oberseite des Sicherheitsbelüftungskörpers befestigt ist und daran angebondet oder schmelzgebondet ist, um die vollständige, wiederverschließbare Sicherheitsbelüftung zu bilden.

## Revendications

1. Event de sécurité pouvant être refermé de façon étanche pour une batterie, comprenant :
un corps (1) de l'évent de sécurité comportant un trou traversant (1b) situé au centre de sa surface intérieure inférieure, entouré par une partie extrudée circulaire (1c);
un capot (2) pour l'évent de sécurité, comportant un trou d'évent (2a); et
un composant formant soupape élastique constitué par un siège de soupape (3) et un tampon élastique (4), qui sont réunis l'un à l'autre sous la forme d'une unité monobloc, dont la partie supérieure est insérée à l'intérieur d'un ressort hélicoïdal (5) de sorte que ledit ressort hélicoïdal (5), qui est logé dans ledit corps (1), applique une pression contre la surface supérieure d'une partie formant bride (3a) dudit composant formant soupape;
ledit composant formant soupape élastique étant repoussé par la surface inférieure du tampon (4) contre la partie extrudée circulaire (1c) à l'intérieur dudit corps (1) de l'évent de sécurité pour fermer le trou traversant (1b),
caractérisé en ce que le capot (2) de l'évent de sécurité est réuni au corps (1) de l'évent de sécurité au moyen d'une liaison ou d'un soudage par fusion de manière à définir un espace dans ce corps, et en ce que le matériau du corps (1) de l'évent de sécurité et du capot (2) de l'évent de sécurité est au moins un matériau qui est identique au matériau d'un récipient pour ladite batterie et qui est sélectionné dans le groupe comprenant une matière plastique résistant aux alcalis, comme par exemple du polyamide, du polypropylène, une résine dénaturée constituée principalement d'ester de polyphénylène, d'un copolymère acrylonitrile-styrène, d'un terpolymère acrylonitrile-butadiène-styrène.

2. Event de sécurité pouvant être refermé de façon étanche selon la revendication 1, dans lequel l'intérieur du corps (1) de l'évent de sécurité possède une forme cylindrique, et des sections transversales horizontales du capot (2) de l'évent de sécurité, du siège de soupape (3) et du tampon (4) sont circulaires; et le corps de l'évent de sécurité, le capot de l'évent de sécurité, le composant formant soupape constitué par le siège de soupape et le tampon, et le ressort hélicoïdal sont empilés verticalement de telle sorte que leurs axes centraux sont situés sur un axe commun.

3. Event de sécurité pouvant être refermé de façon étanche selon la revendication 1 ou 2, dans lequel la hauteur de la partie extrudée circulaire (1c) située sur la surface inférieure du corps (1) de l'évent de sécurité se situe dans une gamme de 0,25 - 2,00 mm et que la forme en coupe transversale de la partie extrudée circulaire (1c) est semi-circulaire au niveau de son bord supérieur.

4. Event de sécurité pouvant être refermé de façon étanche selon l'une quelconque des revendications 1-3, dans lequel le diamètre de la partie formant bride (3a) du siège de soupape (3) est formé d'une matière plastique résistante aux alcalis ou d'un métal et est inférieur au diamètre intérieur du corps de l'évent de sécurité, et que la surface inférieure plane de ladite partie formant bride (3a) du siège de soupape (3) est réunie ou réunie par fusion audit tampon (4) de manière à former un composant monobloc, le tampon possédant un diamètre égal ou inférieur à celui du diamètre de la bride, une épaisseur de 0,5 - 1,5 mm et une dureté Shore dans une gamme de 50°-100°.

5. Event de sécurité pouvant être refermé de façon étanche selon l'une quelconque des revendications 1-4, dans lequel le matériau dudit tampon (4) est au moins un matériau choisi dans le groupe comprenant des matériaux synthétiques résistant aux alcalis et possédant une faible perméabilité à l'hydrogène, comme par exemple un copolymère acrylonitrile-butadiène, du polychlorobutadiène et du éthylène-propylène-diène.

6. Event de sécurité pouvant être refermé de façon étanche selon l'une quelconque des revendications 1-5, dans lequel le composant formant soupape est fabriqué avec ledit siège de soupape (3) formé d'un métal résistant aux alcalis et réuni d'un seul tenant à un matériau élastique synthétique thermoplastique par moulage par injection, puis sulfaté par chauffage.

7. Event de sécurité pouvant être refermé de façon étanche selon l'une quelconque des revendications précédentes, dans lequel le ressort hélicoïdal est formé d'un acier inoxydable ou d'un fil d'acier plaqué de nickel, possède une longueur libre de 5-15 mm et la constante d'élasticité du ressort se situe dans la gamme de 0,2-2,0 kgf/mm.

8. Batterie alcaline rechargeable étanche comprenant un conteneur (12) possédant une pluralité de groupes (11) d'électrodes, constitués de plaques positives et de plaques négatives entre lesquelles est intercalé un séparateur, et contenant une quantité appropriée d'un électrolyte alcalin de manière que lesdits groupes d'électrodes soient imprégnés, et un capot (13) pour un récipient, équipé d'un évent de sécurité (16) pouvant être refermé de façon étanche, selon l'une quelconque des revendications 1 à 7, le capot étant scellé de façon hermétique au conteneur le long du bord supérieur de ce dernier, au moyen d'un soudage ou d'un soudage par fusion.

9. Batterie alcaline rechargeable étanche selon la revendication 8, dans laquelle un corps formant évent de sécurité est incorporé sous la forme d'une unité monobloc avec ledit capot du conteneur, ou ledit corps de l'évent de sécurité est réuni ou réuni par fusion audit capot du conteneur pour former une partie du capot du conteneur, ledit composant formant soupape et ledit ressort hélicoïdal sont placés à l'intérieur du corps de l'évent de sécurité dudit capot du récipient; et une partie extrudée inférieure du capot de l'évent de sécurité est insérée à l'intérieur de l'extrémité supérieure du ressort hélicoïdal, et ledit capot de l'évent de sécurité et le couvercle de l'évent de sécurité repousse par sa surface inférieure ledit ressort hélicoïdal vers le bas de sorte que le capot de l'évent de sécurité est fixé au niveau d'une cavité située à la partie supérieure dudit corps de l'évent de sécurité et est soudé ou soudé par fusion sur ce corps pour former l'évent de sécurité pouvant être refermé de façon étanche, terminé.
